# EUROPEAN PATENT APPLICATION

(11) **EP 4 804 052 A1**
(43) Date of publication of application: **09.09.2026**
(21) Application number: 26157786.0
(22) Date of filing: 11.02.2026
(51) Int. Cl.: G06F 16/732, G06N 5/022, G06V 10/82

(54) **RETRIEVAL AUGMENTED VIDEO UNDERSTANDING WITH COMPOSITIONAL REASONING OVER GRAPH**

(30) Priority: 07.03.2025 IN 202511020838
(71) Applicant: FUJITSU LIMITED, Kawasaki-shi, Kanagawa 211-8588 (JP)
(72) Inventor: MALIK, Sameer, 560103 Bengaluru, Karnataka (IN); YAMADA, Moyuru, Kawasaki-shi, Kanagawa, 211-8588 (JP)
(74) Representative: Hoffmann Eitle

(57) **Abstract**

According to an aspect, operations include acquiring a sequence of video frames associated with video data and a query. The operations further include acquiring a temporal graph associated with the sequence of video frames . The temporal graph includes a set of subgraphs corresponding to the sequence of video frames, with a set of nodes and edges in each subgraph representing the set of entities and relationships between the set of nodes, respectively. The operations further include converting the query into a set of retrieval functions and applying the set of retrieval functions on the temporal graph to retrieve a query response including at least one video frame of the set of video frames.

## Description

### FIELD

The embodiments discussed in the present disclosure are related to retrieval augmented video understanding with compositional reasoning over graph. In particular, the embodiments discussed in the present disclosure are related to retrieving a query response from video data based on reasoning over a graph associated with the video data.

### BACKGROUND

Understanding videos allows for comprehensive content analysis by integrating visual, auditory, and textual data. Accurate captions and descriptions improve accessibility. This capability enhances user experience with personalized recommendations, facilitates efficient information retrieval, and supports automated content moderation for safer online environments.

Understanding the content of videos inherently necessitates the capability to memorize multi-modal information and retrieve such information based on a given task. Recent progress in Large Multimodal Models (LMMs) has demonstrated potential in addressing this challenge. However, understanding long videos, ranging from minutes to hours, continues to be a substantial challenge, even for these advanced models. Current LMMs have the limitation of explicit memory and retrieval mechanisms. The current LMMs take the entire video as input even when a question is only about a specific part of a video. Conventional approaches generally involve either sampling of key frames from the video or compressing the video by grouping similar frames, regardless of the input questions, potentially overlooking crucial details required for answering for the questions. Further, conventional approaches also involve retrieving relevant frames iteratively from the video until sufficient information is obtained to answer the questions. These conventional approaches highly rely on simple similarity between the questions and individual frames of the video, rather than tracking identity of objects across consecutive frames. This may result in inaccurate understanding of the videos, resulting in inadequate answers to complex questions. Additionally, the current LMMs are trained on specific datasets and may struggle for generalization.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of an embodiment, the method may include a set of operations which may include acquiring a sequence of video frames associated with video data. The set of operations may further include receiving a query associated with the video data. The set of operations may further include acquiring a temporal graph associated with the received sequence of video frames . The temporal graph may include a set of subgraphs corresponding to the sequence of video frames, with a set of nodes in each subgraph of the set of subgraphs representing a set of entities and edges in each subgraph of the set of subgraphs representing relationships between the set of nodes in a respective video frame. The set of operations may further include converting the query into a set of retrieval functions. The set of operations may further include applying the set of retrieval functions on the temporal graph to retrieve a query response including at least one video frame of the set of video frames.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

### BRIEF DESCRIPTION OF THE DRAWINGS

Example embodiments will be described and explained with additional specificity and details through the use of the accompanying drawings in which:
FIG. 1 is a diagram representing an example environment related to retrieval augmented video understanding with compositional reasoning over graph;
FIG. 2 is a block diagram that illustrates an exemplary system for retrieval augmented video understanding with compositional reasoning over graph;
FIG. 3A and FIG. 3B collectively illustrate diagrams depicting retrieval augmented video understanding with compositional reasoning over the graph;
FIG. 4A, FIG. 4B, and FIG. 4C collectively illustrate a diagram that represents exemplary generation of a temporal graph from a sequence of video frames; and
FIG. 5 is a diagram that illustrates a flowchart of an example method for retrieval augmented video understanding with compositional reasoning over graph,
all according to at least one embodiment described in the present disclosure.

### DESCRIPTION OF EMBODIMENTS

Some embodiments described in the present disclosure relate to methods and systems retrieval augmented video understanding with compositional reasoning over graph. In the present disclosure, a sequence of video frames may be acquired. Further, a query associated with the video data may be received. Further, a temporal graph associated with the received sequence of video frames may be acquired. The temporal graph may also be generated from the received sequence of video frames. The temporal graph may include a set of subgraphs corresponding to the sequence of video frames. A set of nodes in each subgraph of the set of subgraphs may represent a set of entities, such that a particular node of the set of nodes may represent a particular entity of the set of entities in a respective subgraph. Further, each subgraph of the set of subgraphs may include edges representing relationships between the set of nodes. The query may be converted into a set of retrieval functions. Thereafter, the set of retrieval functions may be applied on the temporal graph to retrieve a query response including at least one video frame of the sequence of video frames.

According to one or more embodiments of the present disclosure, the technological field of information retrieval and question answering may be improved by configuring a computing system in a manner that the computing system is able to perform retrieval augmented video understanding with compositional reasoning over graph.

Understanding of videos enhances user experience with personalized recommendations, which necessitates the capability to memorize multi-modal information and retrieve it based on a given task. LLMs like GPT^{®} or Gemini^{®} are typically employed in language reasoning, image comprehension, and commonsense understanding. However, video understanding still faces challenges due to the need to process causal, spatial, and temporal dynamics simultaneously. In some approaches. neural models trained on domain-specific datasets are also employed to understand the contents of videos, however, their capabilities to superficial perception tasks such as content identification and movement detection are limited. In addition, LLMs supporting video data fail to achieve comprehensive spatiotemporal analysis of video sequences, and they underutilize the extensive commonsense knowledge and reasoning capabilities inherent which affects the cognitive understanding.

The disclosed method provides a comprehensive framework that reflects natural human reasoning patterns, where queries fed by a user function as interactive spaces for decision-making. The disclosed method reconstructs query handling as a stepwise decision process, rooted in human cognitive behavior. By instructing MLLMs to decompose complex queries into manageable components before beginning retrieval functions, the disclosed method creates a cognitive pipeline that evolves from basic visual localization to advanced semantic understanding, achieving improved video comprehension abilities. The disclosed method represents videos as structured temporal graphs, thereby enabling comprehensive modeling of both short-term and long-term temporal relationships. This representation along with query-breakdown facilitates efficient event-based query response retrieval and graph exploration while leveraging MLLMs few-shot learning capabilities without requiring any training.

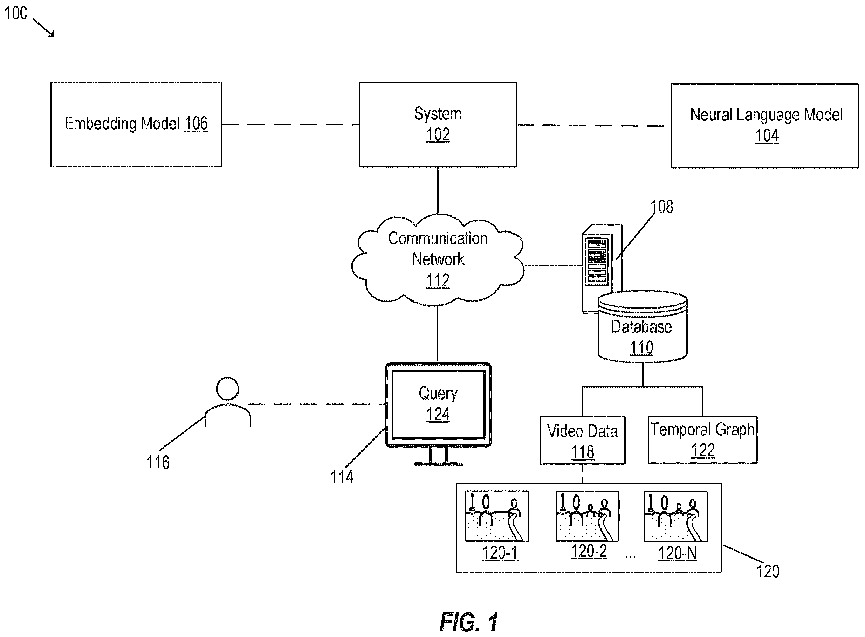

FIG. 1 is a diagram representing an example environment related to retrieval augmented video understanding with compositional reasoning over graph, arranged in accordance with at least one embodiment described in the present disclosure. With reference to FIG. 1, there is shown an environment 100. The environment 100 may include a system 102, a neural language model 104, an embedding model 106, a server 108, a database 110, a communication network 112, and a user device 114. The system 102, the server 108, the database 110, and the user device 114 may be communicatively coupled to each other, via the communication network 112. The server 108 or the database 110 may store video data 118 and corresponding temporal graph 122. The video data 118 may be provided by a user 116 via the user device 114. Alternatively, the video data 118 may be acquired from an external data source.

The system 102 may include suitable logic, circuitry, interfaces, and/or code that may be configured to acquire a sequence of video frames 120 associated with video data 118. The sequence of video frames 120 may include video frames 120-1, 120-2... 120-N. The sequence of video frames 120 may include a set of entities. The system 102 may receive temporal graph 122 associated with the sequence of video frames 120. The system 102 may receive a query 124 associated with the video data 118. In an embodiment, the query 124 may be received from the user 116 associated with the user device 114. The system 102 may further convert the query 124 into a set of retrieval functions. Upon conversion of the query 124 into the set of retrieval functions, the system 102 may apply the set of retrieval functions on the temporal graph 122 to retrieve a query response, where the query response may include at least one video frame of the set of video frames 120. Examples of the system 102 may include, but are not limited to, a desktop computer, a laptop, a computer workstation, a computing device, a mainframe machine, a mobile device, a server (such as a cloud server), or a group of servers. The system 102 may be implemented using hardware including a processor, a microprocessor (e.g., to perform or control performance of one or more operations), a field-programmable gate array (FPGA), or an application-specific integrated circuit (ASIC). In some other instances, the system 102 may be implemented using a combination of hardware and software.

The neural language model 104 may be a computational network or a system of artificial neurons arranged in a plurality of layers that may be used to generate a response to a query (such as the query 124), where the query 124 may be in the form of a text or a multimodal input (e.g., text and images). The neural language model 104 may accept video data (e.g., the video data 118) and may understand the video data by processing a sequence of video frames (e.g., the sequence of video frames 120) associated with the video data 118. The neural language model 104 may further parse the temporal graph 122 by applying the set of retrieval functions to generate a required response to the query 124.

In an exemplary embodiment, the neural language model 104 may refer to a computer-based system or method that employs artificial neural networks, such as transformer-based architectures, designed to process and generate human language text and multimodal data (e.g., text and images). The neural language model 104 may be characterized by the ability to understand and generate text or other modalities by learning patterns and relationships within large datasets, enabling applications in natural language understanding, text generation, translation, multimodal data analysis, and various other language-related tasks. Examples of the neural language model 104 may include, but are not limited to, a GPT (Generative Pre-trained Transformer) model, a BERT (Bidirectional Encoder Representations from Transformers) model, an ELMo (Embeddings from Language) model, a ULMFiT (Universal Language Model Fine-tuning) model, an XLNet model, T5 (Text-to-Text Transfer Transformer) model, RoBERTa, CTRL (Conditional Transformer Language Model), or BART (Bidirectional and Auto-Regressive Transformers).

As an artificial deep neural network, the plurality of layers of the neural language model 104 include an input layer, one or more hidden layers, and an output layer. Each layer of the plurality of layers may include one or more nodes (or artificial neurons, for example). Outputs of all nodes in the input layer may be coupled to at least one node of hidden layer(s). Similarly, inputs of each hidden layer may be coupled to outputs of at least one node in other layers of the neural language model 104. Outputs of each hidden layer may be coupled to inputs of at least one node in other layers of the neural language model 104. Node(s) in the final layer may receive inputs from at least one hidden layer to output a result. The number of layers and the number of nodes in each layer may be determined from hyper-parameters of the neural language model 104. Such hyper-parameters may be set before or after training the neural language model 104 on a training dataset.

Each node of the neural language model 104 may correspond to a mathematical function (e.g., a sigmoid function or a rectified linear unit) with a set of parameters, tunable during training of the neural language model 104. The set of parameters may include, for example, a weight parameter, a regularization parameter, and the like. Each node may use the mathematical function to compute an output based on one or more inputs from nodes in other layer(s) (e.g., previous layer(s)) of the neural language model 104. All or some of the nodes of the neural language model 104 may correspond to same or a different mathematical function.

The neural language model 104 may include electronic data, which may be implemented as, for example, a software component of an application executable on the system 102. The neural language model 104 may rely on libraries, external scripts, or other logic/instructions for execution by a processing device. The neural language model 104 may include code and routines configured to enable a computing device to perform one or more operations for question answer generation. Additionally, or alternatively, the neural language model 104 may be implemented using hardware including, but not limited to, a processor, a microprocessor (e.g., to perform or control performance of one or more operations), a field-programmable gate array (FPGA), or an application-specific integrated circuit (ASIC). Alternatively, in some embodiments, the neural language model 104 may be implemented using a combination of hardware and software.

The embedding model 106 may be a machine learning model designed to represent words, phrases, texts, images, or entire documents as vectors, which are points in a continuous vector space. These vectors may encapsulate semantic meanings and relationships between text elements, facilitating more effective processing and analysis of natural language data. In this model, each word or text element may be represented as a dense vector of real numbers, typically of fixed length, such as 128, 512, or 768. The core idea is that words or text elements with similar meanings are mapped to vectors that are close to each other in the vector space. For instance, the words "airport" and "flight" would have vectors that are closer to each other than the vectors for "airport" and "shop."

Training the embedding model 106 may involve a large corpora of text data, where the embedding model 106 learns to position words in the vector space such that the distances between vectors reflect semantic relationships between the vectors. Common training methods include Word2Vec, which uses techniques like Continuous Bag of Words (CBOW) and Skip-gram to predict context words from a target word or vice versa, and GloVe (Global Vectors for Word Representation), which leverages word co-occurrence statistics from a corpus to learn embeddings. Examples of the embedding model 106 may include, but are not limited to, GloVe, Word2Vec, BERT (Bidirectional Encoder Representations from Transformers), GPT (Generative Pre-trained Transformer), ELMo (Embeddings from Language Models), and Transformer-XL.

The server 108 may be implemented as a cloud server that may be configured to acquire the video data 118 and the temporal graph 122 and the query 124 associated with the video data 118. The video data 118 may include sequence of video frames 120. Further, the acquired video data 118, corresponding sequence of video frames 120, temporal graph 122, and query 124 may be shared with the system 102. The server 108 may be implemented using on-premises hosting (local servers), colocation hosting (third-party data centers), bare metal servers (dedicated servers), edge computing (local data processing), fog computing (decentralized data processing), mesh computing (distributed computing), hybrid cloud (combination of on-premises and cloud), or multicloud (multiple cloud providers).

The server 108 may execute operations through web applications, cloud applications, HTTP requests, repository operations, file transfer, and the like. Example implementations of the server 108 may include, but are not limited to, a database server, a file server, a web server, an application server, a mainframe server, or a cloud computing server.

In at least one embodiment, the server 108 may be implemented as a plurality of distributed cloud-based resources by use of several technologies that are well known to those ordinarily skilled in the art. A person with ordinary skill in the art will understand that the scope of the disclosure may not be limited to the implementation of the server 108 and the system 102 as two separate entities. In certain embodiments, the functionalities of the server 108 can be incorporated in its entirety or at least partially in the system 102, without a departure from the scope of the disclosure. In certain embodiments, the server 108 may host the database 110. Alternatively, the server 108 may be separate from the database 110 and may be communicatively coupled to the database 110.

The database 110 may be configured to store the sequence of video frames 120 associated with the video data 118. The database 110 may also store a URL or a path of the video data 118 along with temporal graph 122 associated with the sequence of video frames 120. The database 110 may be derived from data off a relational or nonrelational database, or a set of comma-separated values (csv) files in conventional or bigdata storage. The database 110 may be stored or cached on a device, such as the server 108 or the system 102. The device storing the database 110 may be configured to receive a command from the system 102 for retrieving a query response based on a DB query. In response, the device of the database 110 may be configured to retrieve and provide at least one record associated with video frames of the sequence of video frames 120 as the query response to the system 102. In some embodiments, the database 110 may be hosted on a plurality of servers stored at same or distinct locations. The operations of the database 110 may be executed using hardware including a processor, a microprocessor (e.g., to perform or control performance of one or more operations), a field-programmable gate array (FPGA), or an application-specific integrated circuit (ASIC). In some other instances, the database 110 may be implemented using software.

The communication network 112 may include a communication medium through which the system 102 may communicate with the server 108. Examples of the communication network 112 may include, but are not limited to, the Internet, a cloud network, a Wireless Fidelity (Wi-Fi) network, a Personal Area Network (PAN), a Local Area Network (LAN), and/or a Metropolitan Area Network (MAN). Various devices in the environment 100 may be configured to connect to the communication network 112, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, light fidelity(Li-Fi), 802.16, IEEE 802.11s, IEEE 802.11g, multi-hop communication, wireless access point (AP), device to device communication, cellular communication protocols, and/or Bluetooth (BT) communication protocols, or a combination thereof.

The user device 114 may include a user-interface through which the user 116 may interact with the system 102, send queries, feed commands and/or instructions, and provide the query 124 to the system 102. The user 116 may be an authorized person associated with the system 102 or the server 108. The user device 114 may be fixed at a place or may be portable. Examples of the user device 114 may include, but not limited to, a smartphone, a wearable device, a personal computer, an admin terminal of a server, or a display device.

In operation, the system 102 may acquire sequence of video frames 120 associated with the video data 118. Each video frame of the sequence of video frames 120 may include a set of entities. The set of entities may differ for distinct video frames from the sequence of video frames 120, i.e., entities included in the set of entities may vary for subsequent video frames. In an instance, the set of entities may include humans, animals, organizations, locations, and other objects such as bottle, bowl, electronics, fixtures, clothes, and the like.

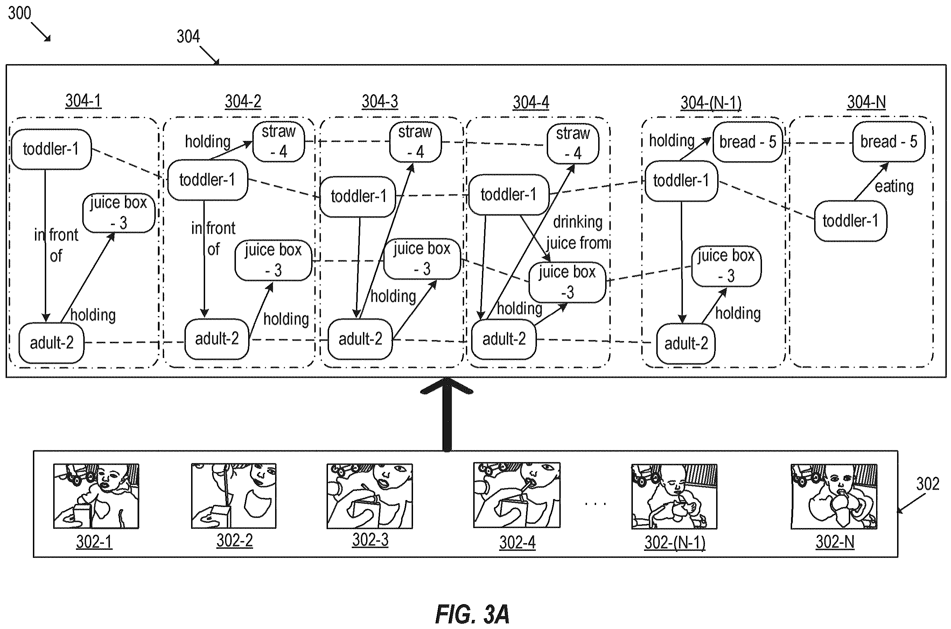

In an embodiment, the video data 118 may be acquired from the server 108 or the database 110. In another embodiment, the video data 118 may be fed by the user 116, through the user device 114, to the system 102. Details related to acquisition of the sequence of video frames are further provided, for example, in FIG. 3A.

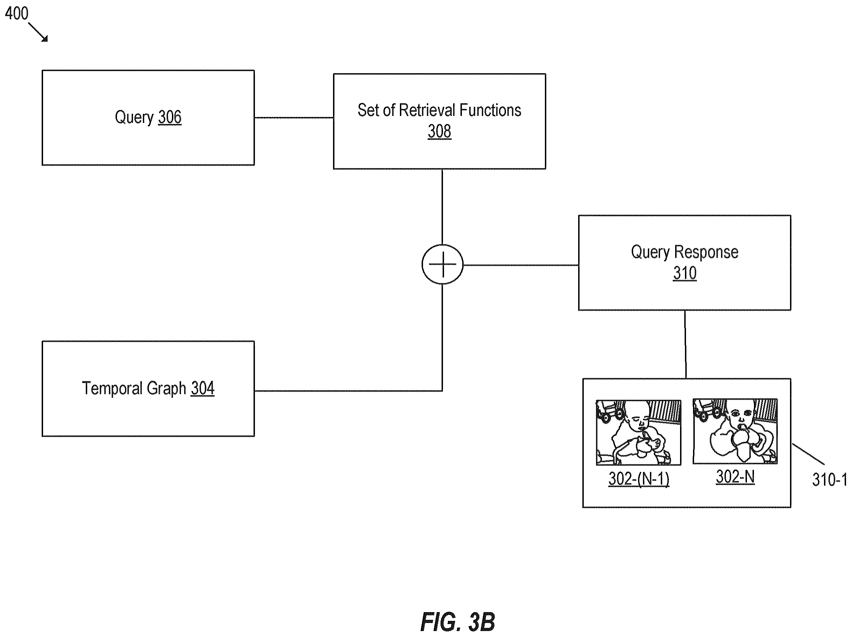

The system 102 may receive the query 124. In an embodiment, the query 124 may be transmitted through a user interface of the user device 114. The system 102 may communicate with the user device 114 to receive the query 124 from the user device 114. The query 124 may be in the form of text in a particular language such as English, French, or any regional language. In another embodiment, the query 124 may be in form of acoustic signals, and further, the system 102 may obtain the acoustic signals from the user 116 and convert the voice signals into a text that forms the query 124. Details related to reception of the query are further provided, for example, in FIG. 3B.

Further, the system 102 may further acquire a temporal graph (for instance, temporal graph 122) associated with the received sequence of video frames 120. The temporal graph 122 may also be generated from the received sequence of video frames using various temporal graph generation techniques. The temporal graph 122 may include a set of subgraphs corresponding to the sequence of video frames. A set of nodes in each subgraph of the set of subgraphs may represent the set of entities, i.e., a particular node of the set of nodes may represent a particular entity of the set of entities in a respective subgraph. Further, the node may further represent attributes of the respective entity. Each subgraph of the set of subgraphs may include edges representing relationships between the set of nodes. For instance, in a subgraph corresponding to a video frame representing two persons playing football, if a node A represents 'person-1' and a node B represents 'person-2', then relationship 'playing football' may be added as an edge C in between the node A and the node B.

The set of nodes (i.e., entity nodes) may include attributes (or visual attributes) and spatial location from a respective video frame. Nodes corresponding to the same entity across consecutive sub-graphs of the temporal graph 122 may be connected to track each entity through time and capture temporal dynamics of the respective entity.

In the context of Natural Language Processing (NLP), entities and entity types are concepts used in tasks such as Named Entity Recognition (NER). For instance, each node of the set of nodes representing an entity of the set of entities, which may represent real-world objects, concepts, or phenomena. Such entities may include, for instance, names of people, humans, animals, objects, organizations, locations, dates, quantities, and the like. Entity types are categories or classes into which these entities may be grouped. Each entity type may represent a specific kind of information. Common entity types include Person (PER) for names of individuals, Organization (ORG) for names of companies or institutions, Location (LOC) for geographical locations, Date (DATE) for specific dates or time expressions, Time (TIME) for specific times of the day, Money (MONEY) for monetary values, Percent (PERCENT) for percentage values, and Miscellaneous (MISC) for other entities that do not fit into the above categories. For instance, consider the sentence: "Google^{®} was founded by Larry Page and Sergey Brin in September 1998 in Menlo Park." In this sentence, the entities are "Google," "Larry Page," "Sergey Brin," "September 1998," and "Menlo Park." The corresponding entity types are Organization for "Google," Person for "Larry Page" and "Sergey Brin," Date for "September 1998," and Location for "Menlo Park."

Attributes of the set of entities in the context of video frames may refer to the various characteristics or properties that describe and differentiate each entity of the set of entities detected within the video frames 120. These attributes may include a wide range of features such as, but not limited to, physical appearance, action or activity, body pose, or bounding box coordinates around an entity (respective entity of the set of entities in a respective video frame of the sequence of video frames 120). For example, in a video frame, attributes of a particular person may include activity (such as driving), facial attributes, gender, height, and other attributes related to physical appearance. These attributes may be crucial for accurately identifying and tracking distinct entities across multiple video frames of the set of video frames 120, as such attributes provide the necessary data to distinguish one entity from another, even when such entities appear similar or when the video conditions such as lighting, angle, or background change. Details related to acquisition of the temporal graph are further provided, for example, in FIG. 3A.

The system 102 may further convert the query 124 into a set of retrieval functions. For conversion, the system 102 may phrase the query 124 into a sequence of phrases by prompting the neural language model 104 with the query 124. In an embodiment, the process of converting the query 124 into the set of retrieval functions may involve identifying and isolating specific pieces of data associated with the query 124. Each piece of the isolated pieces may represent distinct entities of the first set of entities/events related to the entities, and related information such as entity-type of the set of entity types and description related for all the entities present within the text associated with the query 124.

The system 102 may further select a set of retrieval functions from a defined set of retrieval functions. The defined set of retrieval functions may be retrieved from the server 108 or memory of the system 102. Further, the system 102 may assign each phrase of the sequence of phrases as an input parameter to a respective retrieval function of the set of retrieval functions. In an exemplary embodiment, the set of retrieval functions may include a node localization function, an entity event analysis function, and a frame extraction function.

The system 102 may further apply the set of retrieval functions on the temporal graph 122 to retrieve a query response including at least one video frame of the sequence of video frames 120. In an instance, the first retrieval function of the set of retrieval functions may be applied to identify a relevant node from the set of nodes, which matches a first phrase from the sequence of phrases. The second retrieval function of the set of retrieval functions may be applied to determine a time index of an entity-specific description that matches a context of a second phrase from the sequence of phrases. The third retrieval function of the set of retrieval functions may be applied to extract at least one video frame from the sequence of video frames based on analysis of a third phrase from the sequence of phrases and the time index. Details related to the application of the set of retrieval functions are further provided, for example, in FIG. 3B.

The disclosed system 102 may receive sequence of video frames 120 and corresponding temporal graph 122 (obtained from the server 108 or the user device 114). Further, the system 102 may receive query 124 associated with the sequence of video frames 120. The system 102 may further convert the query 124 into a set of retrieval functions. The system 102 may further apply the set of retrieval functions on the temporal graph 122 to retrieve a query response including at least one video frame of the sequence of video frames 120. The system 102 may retrieve the query response that may include the required video frame based on retrieval augmented video understanding with compositional reasoning over the temporal graph.

Although there are several conventional approaches for generating query response from images and videos, however they are limited by restricted vocabulary and poor generalization due to the relatively small size of the training data. To overcome the above-mentioned limitations, the system 102 employs the neural language model 104 (for instance, a Large Multi-modal Model (LMM)) to convert the query 124 into the set of retrieval functions. Further, the set of retrieval functions may be applied on the temporal graph 122 to retrieve optimal query response.

Modifications, additions, or omissions may be made to FIG. 1 without departing from the scope of the present disclosure. For example, the environment 100 may include more or fewer elements than those illustrated and described in the present disclosure. For instance, in some embodiments, the environment 100 may include the system 102 but not the database 110. In addition, in some embodiments, the functionality of the database 110 may be incorporated into the system 102, without a deviation from the scope of the disclosure.

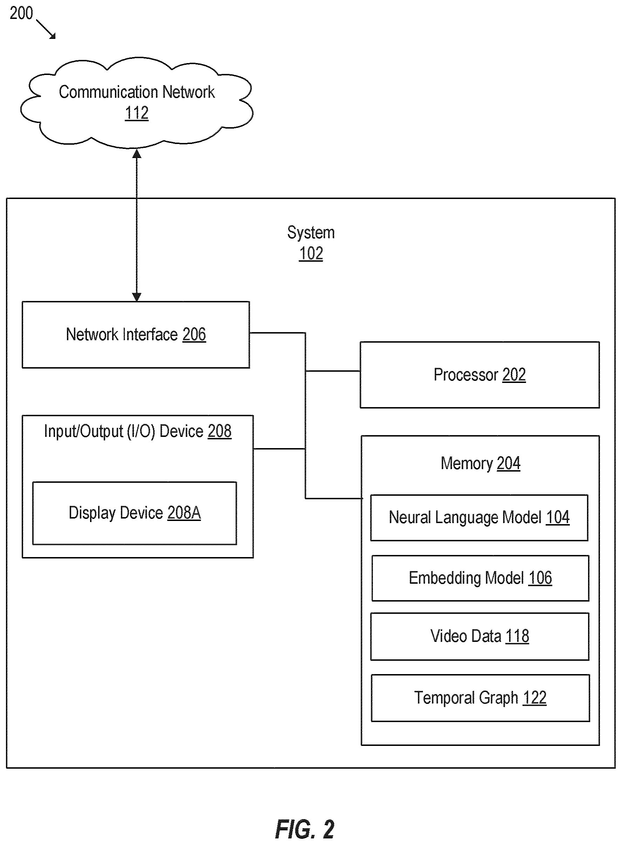

FIG. 2 is a block diagram that illustrates an exemplary system for retrieval augmented video understanding with compositional reasoning over graph, arranged in accordance with at least one embodiment described in the present disclosure. FIG. 2 is explained in conjunction with elements from FIG. 1. With reference to FIG. 2, there is shown a block diagram 200 of a system 102. The system 102 may include a processor 202, a memory 204, a network interface 206, an input/output (I/O) device 208, and a display device 208A.

The processor 202 may include suitable logic, circuitry, and/or interfaces that may be configured to execute program instructions associated with different operations to be executed by the system 102. The processor 202 may be configured to acquire a sequence of video frames 120 associated with video data 118. The processor 202 may further be configured to receive a query 124 associated with the video data 118. The processor 202 may be configured to acquire temporal graph 122 associated with the received sequence of video frames 120. The temporal graph 122 may also be generated from raw video frames by prompting the neural language model 104. Alternatively, the temporal graph 122 may be retrieved from a graph database of scene graphs. The processor 202 may be configured to convert the query 124 into a set of retrieval functions. The processor 202 may further be configured to apply the set of retrieval functions on the temporal graph 122 to retrieve a query response including at least one video frame of the sequence of video frames 120.

The processor 202 may include any suitable special-purpose or general-purpose computer, computing entity, or processing device including various computer hardware or software modules and may be configured to execute instructions stored on any applicable computer-readable storage media. For example, the processor 202 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 2, the processor 202 may include any number of processors configured to, individually or collectively, perform or direct performance of any number of operations of the system 102, as described in the present disclosure. Additionally, one or more of the processors may be present on one or more different electronic devices, such as different servers. In some embodiments, the processor 202 may be configured to interpret and/or execute program instructions and/or process data stored in the memory 204. Some of the examples of the processor 202 may be a Graphics Processing Unit (GPU), a Central Processing Unit (CPU), a Reduced Instruction Set Computer (RISC) processor, an ASIC processor, a Complex Instruction Set Computer (CISC) processor, a co-processor, and/or a combination thereof.

The memory 204 may include suitable logic, circuitry, interfaces, and/or code that may be configured to store the the sequence of video frames 120 associated with the video data 118 and the temporal graph 122. The memory 204 may store program instructions executable by the processor 202. In certain embodiments, the memory 204 may be configured to store operating systems and associated application-specific information. The memory 204 may include computer-readable storage media for carrying or having computer-executable instructions or data structures stored thereon. Such computer-readable storage media may include any available media that may be accessed by a general-purpose or special-purpose computer, such as the processor 202. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The network interface 206 may comprise suitable logic, circuitry, interfaces, and/or code that may be configured to establish a communication between the system 102, the neural language model 104, the embedding model 106, the server 108, device of the database 110, and the user device 114 via the communication network 112. The network interface 206 may be implemented by use of various known technologies to support wired or wireless communication of the system 102, via the communication network 112. The network interface 206 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer.

The network interface 206 may be configured to communicate via wireless communication with networks, such as the Internet, an Intranet, a wireless network, a cellular telephone network, a wireless local area network (LAN), or a metropolitan area network (MAN). The wireless communication may be configured to use one or more of a plurality of communication standards, protocols and technologies, such as Global System for Mobile Communications (GSM), Enhanced Data GSM Environment (EDGE), wideband code division multiple access (W-CDMA), Long Term Evolution (LTE), 5th Generation (5G) New Radio (NR), code division multiple access (CDMA), time division multiple access (TDMA), Bluetooth, Wireless Fidelity (Wi-Fi) (such as IEEE 802.11a, IEEE 802.11b, IEEE 802.11g or IEEE 802.11n), voice over Internet Protocol (VoIP), light fidelity (Li-Fi), Worldwide Interoperability for Microwave Access (Wi-MAX), a protocol for email, instant messaging, and a Short Message Service (SMS).

The I/O device 208 may include suitable logic, circuitry, interfaces, and/or code that may be configured to acquire the sequence of video frames 120, the temporal graph 122, and receive the query 124. The I/O device 208 may include various input and output devices, which may be configured to communicate with the processor 202 and other components, such as the network interface 206. Examples of the input devices may include, but are not limited to, a touch screen, a keyboard, a mouse, a joystick, and/or a microphone. Examples of the output devices may include, but are not limited to, a display (e.g., the display device 208A) and a speaker.

The display device 208A may comprise suitable logic, circuitry, interfaces, and/or code that may be configured to display a query response generated for the query 124. The display device 208A may be configured to receive the query 124 from the user 116. In such cases the display device 208A may be a touch screen to receive user inputs associated with the query 124. The display device 208A may be realized through several known technologies such as, but not limited to, a Liquid Crystal Display (LCD) display, a Light Emitting Diode (LED) display, a plasma display, and/or an Organic LED (OLED) display technology, and/or other display technologies.

Modifications, additions, or omissions may be made to the example system 102 without departing from the scope of the present disclosure. For example, in some embodiments, the example system 102 may include any number of other components that may not be explicitly illustrated or described for the sake of brevity.

FIG. 3A and FIG. 3B collectively illustrate retrieval augmented video understanding with compositional reasoning over the temporal graph, in accordance with an embodiment of the disclosure. FIG. 3A and FIG. 3B are described in conjunction with elements from FIG. 1 and FIG. 2. With reference to FIG. 3A and FIG. 3B, there is shown a diagram 300 depicting retrieval augmented video understanding with compositional reasoning over the graph. The operations illustrated in the diagram 300 may be performed by any suitable system, apparatus, or device, such as, by the example system 102 of FIG. 1, or the processor 202 of FIG. 2. Although illustrated with discrete blocks, the steps and operations associated with one or more of the blocks of the diagram 300 may be divided into additional blocks, combined into fewer blocks, or eliminated, depending on the particular implementation.

Although illustrated with discrete blocks, the steps and operations associated with one or more of the blocks of the diagram 300 may be divided into additional blocks, combined into fewer blocks, or eliminated, depending on the particular implementation.

Referring to FIG. 3A, the processor 202 may acquire video frames 302-1, 302-2, 302-3, 302-4 ... 302-(N-1), and 302-N as a sequence of video frames 302. The video frames 302-1 to 302-N may be acquired by sampling the sequence of video frames 302, where each video frame of the video frames 302-1 to 302-N may include a set of entities, such as an adult, toddler, juice box, and bread. In an embodiment, the video frames 302-1 to 302-N may be acquired from the server 108 or the database 110. In another embodiment, the video frames 302-1 to 302-N may be uploaded by the user 116 through the user device 114, which may transfer the video frames 302-1 to 302-N to the system 102. The video frames 302-1 to 302-N may illustrate various interactions between the adult and the toddler, and activities of the toddler.

As an example, the video frame 302-1 may represent a toddler sitting in front of an adult, and the adult is holding a juice box. The corresponding set of entities for video frame 302-1 may include the adult, the toddler, and the juice box. The video frame 302-2 may represent the adult, standing in front of the toddler, holding the juice box, and the toddler holding the straw. The corresponding set of entities for video frame 302-2 may include the adult, the toddler, the juice box, and the straw. The video frame 302-3 may represent the adult, standing in front of the toddler, holding the juice box and the straw. The corresponding set of entities for video frame 302-3 may include the adult, the toddler, the juice box, and the straw. The video frame 302-4 may represent the adult holding the juice box and the straw, and the toddler drinking juice from the juice box. The corresponding set of entities for video frame 302-4 may include the adult, the toddler, the juice box, and the straw. Similarly, the video frame 302-(N-1) may represent the adult holding the juice box, and the toddler holding a loaf of bread. The corresponding set of entities for the video frame 302-(N-1) may include the adult, the toddler, the juice box, and the bread. The video frame 302-N may represent the toddler eating the loaf of bread. The corresponding set of entities for the video frame 302-N may include the toddler and the bread.

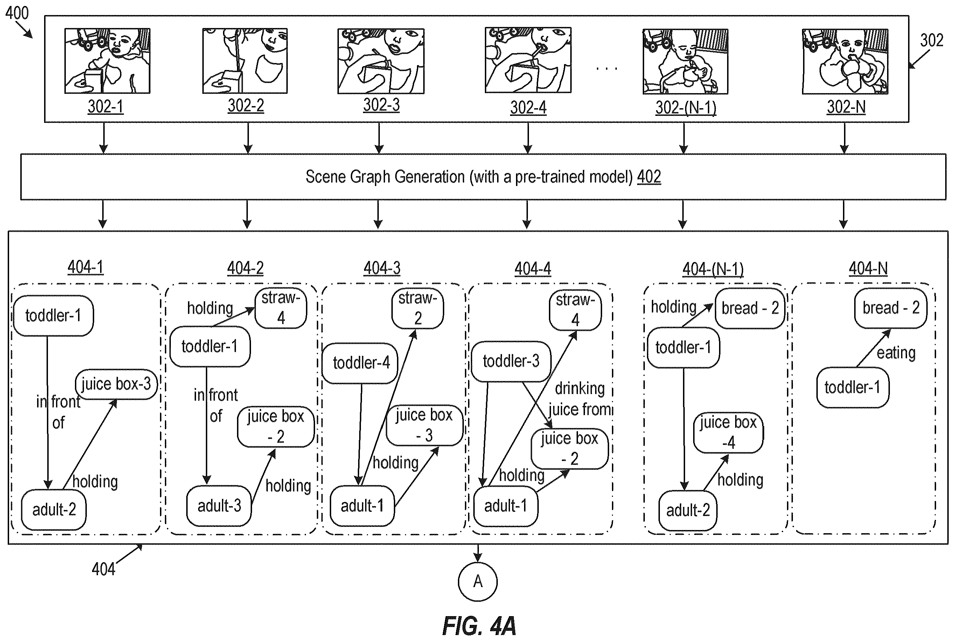

The processor 202 may acquire temporal graph 304 including a set of subgraphs 304-1, 304-2, 304-3, 304-4... 304-(N-1), and 304-N, such that each subgraph of the set of subgraphs 304-1 to 304-N includes a set of nodes associated with the set of entities in a respective video frame. The processor 202 may also generate the temporal graph 304 including the set of subgraphs 304-1 ... 304-N, based on the acquired video frames 302-1... 302-N (elaborated in FIG. 4A to FIG. 4C).

The set of subgraphs 304-1 to 304-N may follow a temporal order of the video frames 302-1 to 302-N and each subgraph may capture associations or relationships between entities illustrated in a respective video frame of the video frames 302-1 to 302-N. For example, the set of nodes associated with the set of entities in the subgraph 304-1 may include "toddler-1", "adult-2", and "juice box-3". The subgraph 304-1 may include edge "in front of" between the nodes "toddler-1" and "adult-2", and edge "holding" between the nodes "adult-2" and "juice box-3". The set of nodes associated with the set of entities in the subgraph 304-2 may include "toddler-1", "adult-2", "juice box-3", and "straw-4". The subgraph 304-2 may include edge "in front of" between the nodes "toddler-1" and "adult-2", edge "holding" between the nodes "adult-2" and "juice box-3", and another edge "holding" between the nodes "toddler-1" and "straw-4". The set of nodes associated with the set of entities in the subgraph 304-3 may include "toddler-1", "adult-2", "juice box-3", and "straw-4". The subgraph 304-3 may include edges "holding" between the nodes "adult-2" and "juice box-3", and "adult-2" and "straw-4". The subgraph 304-4 may include edges "holding" between the nodes "adult-2" and "juice box-3", and "adult-2" and "straw-4", and edge "drinking juice from" between the nodes "toddler-1" and "juice box-3". The set of nodes associated with the set of entities in the subgraph 304-4 may include "toddler-1", "adult-2", "juice box-3", and "straw-4". The set of nodes associated with the set of entities in the subgraph 304-(N-1) may include "toddler-1", "adult-2", "juice box-3", and "bread-5". The subgraph 304-(N-1) may include edges "holding" between the nodes "adult-2" and "juice box-3", and another edge "holding" between the nodes "toddler-1" and "bread-5". The set of nodes associated with the set of entities in the subgraph 304-N may include "toddler-1" and "bread-5". The subgraph 304-N may include edge "eating" between the nodes "toddler-1" and "bread-5".

Further, temporal inter-subgraph connections (represented by dashed lines) may be present between common nodes across the subgraphs 304-1 to 304-N, such as common nodes "toddler-1", "adult-2", "juice box-3", "straw-4", and "bread-5". Specifically, common nodes corresponding to the same entity across consecutive subgraphs of the temporal graph 122 may be connected to track each entity through time and capture temporal dynamics of the respective entity.

Referring to FIG. 3B, the processor 202 may receive a query 306. In an embodiment, the user 116 may provide the query 306 through a user interface of the user device 114. The processor 202 may communicate with the user device 114 to receive the query 306 from the user device 114. Thereafter, the processor 202 may apply a reasoning approach for the query 306, which involves localizing video frames pertinent to answering the query 306 by analyzing the temporal graph 304. For instance, a plurality of examples of query analysis and breakdown for various types of queries, including temporal, descriptive, and causal, may be fed into the system 102 as a training dataset for training (the neural language model 104 of) the system 102. Further, the system 102 may analyze a new query (for instance, the query 306) based on the training dataset.

In another instance, the query 306 may be in the form of text in a particular language such as English, French, or any regional language. The query 306 may require multi-step reasoning approach to identify the relevant video frames of the received video frames 302-1 to 302-N. As an example, the received query 306 may be "What did the toddler do after he drink from the juice pack?"

The processor 202 may phrase the query 306 into a sequence of phrases by prompting the neural language model 104 with the query 306. The processor 202 may further select a relevant set of retrieval functions 308 from a defined set of retrieval functions. For instance, the processor 202 may retrieve the defined set of retrieval functions as stored program instructions from the server 108 or the memory 204. Further, the system 102 may assign each phrase of the sequence of phrases as an input parameter to a respective retrieval function of the set of retrieval functions 308, thereby converting the query 306 into the set of retrieval functions 308. As an example, the set of retrieval functions 308 may include a node localization function, an entity event analysis function, and a frame extraction function.

The processor 202 may apply the set of retrieval functions 308 on the temporal graph 304 to retrieve a query response 310 including at least one video frame of the sequence of video frames 302. Each retrieval function of the set of retrieval functions may be applied in a sequence on the temporal graph 304. For instance, the processor 202 may apply a first retrieval function of the set of retrieval functions 308 by executing following operations: (i) selection of a first phrase as a grounding phrase from the sequence of phrases; (ii) computation of a first phrase embedding by applying the text embedding model on the first phrase; (iii) computation of a plurality of similarity scores between the first phrase embedding and each node embedding of the plurality of node embeddings; and (iv) identification of a relevant node from the plurality of nodes, such that the relevant node matches the first phrase based on the plurality of similarity scores.

For example, for the query "What did the toddler do after he drank from the juice box?" the nodes "toddler-1" and "juice box-3" may be identified. Further, the first retrieval function (i.e., node localization function) may be applied over the query 306 to identify at least one node finding the best match of the first phrase (p_{g}) - "toddler drink from the juice pack" from the among the set of nodes $\left\{{n}_{i}^{j}\right\}$.

To determine the best match, the processor 202 may compute the plurality of similarity scores based on a cosine similarity between the first phrase embedding and each node embedding of the plurality of node embeddings ( ${v}_{i}^{j}$). Further, the first phrase embedding (v_{g}) may be represented by the equation (1). As follows: ${v}_{g} = {G}_{e} \left({p}_{g}\right)$

The processor 202 may further select the top-k nodes (*η*) of the set of nodes, whose embeddings exhibit the highest cosine similarity scores with the first (grounding) phrase embedding. The top-k nodes (*η*) and corresponding entity-specific descriptions () may be represented by the equations (2) and (3), respectively. $η = \left\{{n}_{o} … {n}_{k - 1}\right\}$ $P = \left\{{p}_{o} … {p}_{k - 1}\right\}$ Subsequently, the processor 202 may process the textual descriptions of the selected nodes to find the best matching node, which could be represented by equation (4). $\hat{k} = {G}_{l} \left(P, {p}_{g}, {s}_{r}\right)$ where, sᵣ is the system prompt with instructions to select the phrase that best matches the grounding phrase.
Let n_{k̂} be the best matched node. n_{k̂} may correspond to the node of entity-j in frame-i. In an example embodiment, textual description "the toddler drinking juice from the juice box" associated with the nodes "toddler-1" and "juice box-3" in the video frame 302-4 may be the best match of the first phrase.

The processor 202 may further apply a second retrieval function of the set of retrieval functions by executing the following operations: (i) selection of a second phrase from the sequence of phrases; (ii) acquisition of set of entity-specific descriptions corresponding to an entity associated with the relevant node, where the entity is in the set of entities, and each entity-specific description of the set of entity-specific descriptions corresponds to a respective video frame of the sequence of video frames; (iii) determination of an entity-specific description from the set of entity-specific descriptions, where the determined entity-specific description matches a context of the second phrase. The entity-specific description may be determined by prompting the neural language model 104 with an instruction including the second phrase and the set of entity-specific descriptions; and (iv) determination of a time index of the entity-specific description.

For instance, to determine the second phrase "When did the toddler finish drinking from the juice box?" the second retrieval function (i.e., entity event analysis function) may be applied to examine the events *zⱼ* of entity-j. In an instance, the entitydescription for the toddler in 304-(N-1), i.e., toddler holding the bread, may match with the context of the second phrase. This function obtains the time index *tₑ* answering the query 306 (*qₑ*) - "when did the toddler finish drink from the juice box". The time index *tₑ*may be represented by the equation (5), which is given as follows: ${t}_{e} = {G}_{l} \left({q}_{e}, {z}_{j}, {s}_{a}\right)$ where, "sₐ" represents a system prompt with instructions to analyze the given entity events to answer the query (qₑ).

The processor 202 may further apply a third retrieval function of the set of retrieval functions by executing the following operations: (i) selection of a third phrase from the sequence of phrases; and (ii) extraction of the at least one video frame from the sequence of video frames based on analysis of the third phrase and the time index (*tₑ*)*.* In an example embodiment, the third phrase may be "What did the toddler do after finishing drinking from the juice box?" The neural language model 104 may be used on the third phrase to configure the third retrieval function. To answer the third phrase, the subgraph corresponding to the time index (*tₑ*) may be used as an anchor to identify subsequent subgraph(s) (representing time index (*t*_{*e+*1}) and time index *t*_{*e+*2})) as the term "after" appears in the third phrase. The frame(s) corresponding to such subgraph(s) may be used to form a query response 310 to the third phrase. For instance, the third retrieval function (i.e., frame extraction function) may be applied to generate query response 310 based on extraction of at least one video frame from the sequence of video frames. In an instance, as shown in 310-1, the generated query response 310 may include two video frames (for instance, video frames 302-(N-1) and 302-N) of the sequence of video frames answering the query 306(*qₑ*).

In certain instances, when a query is unclear, the neural language model 104 may provide a less precise or even a vague response to the query. In some instances, the processor 202 may fail to extract any relevant entities from the query. Therefore, the processor 202 may be configured to rephrase an input query into the query 306 by applying the neural language model 104 on the input query. The rephrased query 306 may be suitable for retrieval purposes.

In FIG. 3A and FIG. 3B, the diagram 300 is illustrated as discrete operations. However, in certain embodiments, such discrete operations may be further divided into additional operations, combined into fewer operations, or eliminated, depending on the particular implementation without detracting from the essence of the disclosed embodiments.

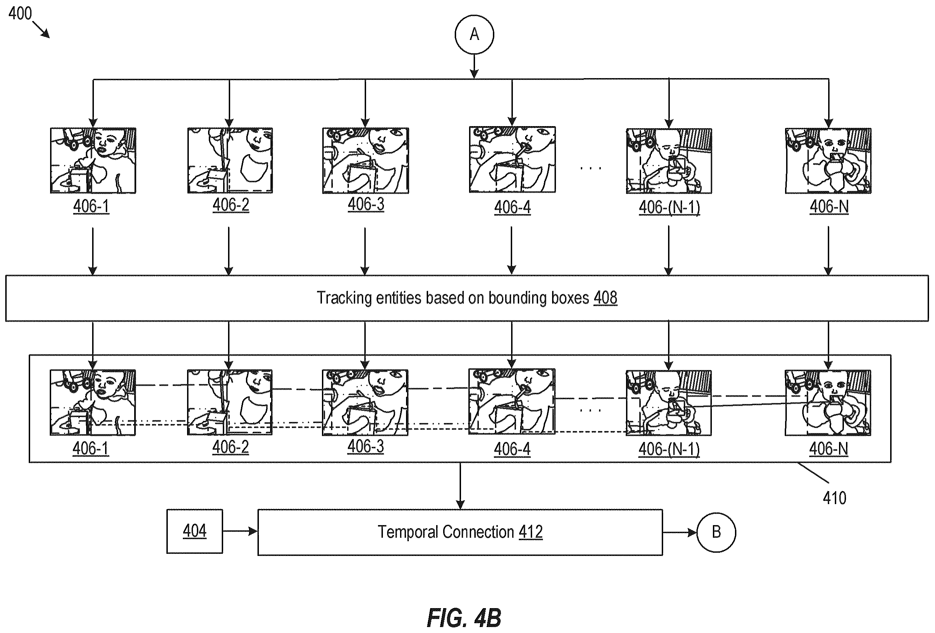

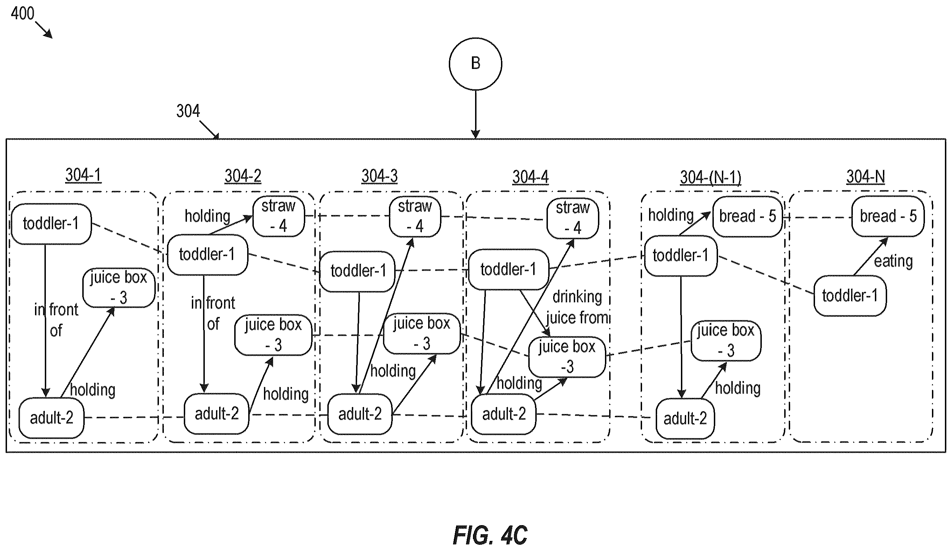

FIG. 4A, FIG. 4B, and FIG. 4C collectively illustrate a diagram 400 that represents exemplary generation of a temporal graph from a sequence of video frames. FIG. 4A, FIG. 4B, and FIG. 4C are described in conjunction with elements from FIG. 1, FIG. 2, FIG. 3A, and FIG. 3B. With reference to FIG. 4A, FIG. 4B, and FIG. 4C, as shown in the diagram 400, the temporal graph 304 may be generated using various existing temporal graph generating techniques. In an instance, the acquired sequence of video frames 302 may be processed through a pre-trained model to generate scene graph information 402 for each video frame of the sequence of video frames 302. Further, the processor 202 may generate a set of subgraphs 404 including subgraphs 404-1, 404-2, 404-3, 404-4... 404-(N-1), and 404-N, such that each subgraph of the set of subgraphs 404-1 to 404-N includes a set of nodes associated with the set of entities in a respective video frame. The set of subgraphs 404-1 to 404-N may follow a temporal order of the video frames 302-1 to 302-N and each subgraph may capture associations or relationships between entities illustrated in a respective video frame of the video frames 302-1 to 302-N. For example, the set of nodes associated with the set of entities in the subgraph 404-1 may include "toddler-1", "adult-2", and "juice box-3", and further the subgraph 404-1 may include an edge "in front of" between the nodes "toddler-1" and "adult-2", and an edge "holding" between the nodes "adult-2" and "juice box-3". However, the set of nodes associated with the set of entities in the subgraph 404-2 may include "toddler-1", "adult-3", "juice box-2", and "straw-4", and further the subgraph 404-2 may include an edge "in front of" between the nodes "toddler-1" and "adult-3", an edge "holding" between the nodes "adult-3" and "juice box-2", and another edge "holding" between the nodes "toddler-1" and "straw-4". Furthermore, the set of nodes associated with the set of entities in the subgraph 404-3 may include "toddler-4", "adult-1", "juice box-3", and "straw-4". As could be seen, here the set of nodes for each subgraph is not consistent. Hence, as illustrated in 406-1, 406-2, 406-3, 406-4 ... 406-(N-1), and 406-N of FIG. 4B, bounding boxes may be created for each of significant entity such as for adult, toddler, juice box, straw, and bread (entities such as grills behind the toddler, stroller, toy train, etc. may be considered as redundant entities and no bounding boxes are created for such entities) in each subgraph. Further, the processor 202 may execute entity tracking 408, such that each entity may be tracked based on the bounding boxes using various entity tracking techniques. Further, the processor 202 may determine inter-subgraph connections 410 (represented by distinct lines) between common nodes across the subgraphs including the bounding boxes (406-1 to 406-N). Further, temporal connections 412 may be made in between common entities in each of the subgraphs. The temporal connections 412 may be made based on the set of subgraphs 404 and the determined inter-subgraph connections 410. Finally, the temporal graph 304 illustrated in FIG. 4C may be generated based on the temporal connections 412 between the set of subgraphs 404 and the determined inter-subgraph connections 410.

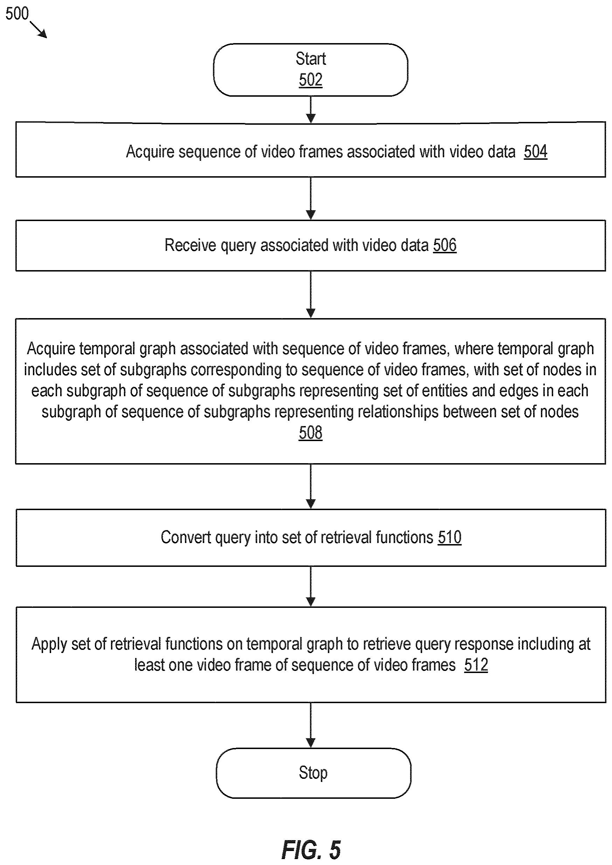

FIG. 5 is a diagram that illustrates a flowchart of an example method for retrieval augmented video understanding with compositional reasoning over graph, in accordance with an embodiment of the disclosure. FIG. 5 is described in conjunction with elements from FIG. 1, FIG. 2, FIG. 3A, FIG. 3B, and FIG. 4. With reference to FIG. 5, there is shown a flowchart 500. The method illustrated in the flowchart 500 may start at 502 and may proceed to 504. The method may be performed by any suitable system, apparatus, or device, such as, by the example system 102 of FIG. 1, or the processor 202 of FIG. 2. Although illustrated with discrete blocks, the steps and operations associated with one or more of the blocks of the flowchart 500 may be divided into additional blocks, combined into fewer blocks, or eliminated, depending on the particular implementation.

At 504, a sequence of video frames may be acquired. In an embodiment, the processor 202 may be configured to acquire the sequence of video frames 120 associated with the video data 118. Each video frame of the sequence of video frames 120 may include a set of entities. The set of entities may differ for distinct video frames from the sequence of video frames 120, i.e., entities included in the set of entities may vary for subsequent video frames. In an instance, the set of entities may include humans, animals, organizations, location, and other objects such as bottle, bowl, mobile, clothes, and the like.

At 506, a query associated with video data, may be received. The processor 202 may receive the query 124 associated with the video data 118. In an embodiment, the user 116 may provide the query 124 through a user interface of the user device 114. Further, the processor 202 may communicate with the user device 114 to receive the query 124 from the user device 114.

At 508, a temporal graph may be acquired. The processor 202 may generate a temporal graph (for instance, temporal graph 122 in FIG. 1) associated with the sequence of video frames 120. The temporal graph 122 may include a set of subgraphs corresponding to the sequence of video frames. A set of nodes in each subgraph of the set of subgraphs may represent the set of entities, such that a particular node of the set of nodes may represent a particular entity of the set of entities in a respective subgraph. Further, each subgraph of the set of subgraphs may include edges representing relationships between the set of nodes.

At 510, the query may be converted into a set of retrieval functions. The processor 202 may further convert the query 124 into a set of retrieval functions. For conversion, the processor 202 may phrase the query 124 into a sequence of phrases by prompting the neural language model 104 with the query 124. In an embodiment, the process of extraction of the entity information from the scene information may involve identifying and isolating specific pieces of data associated with the query 124, where each piece of the isolated pieces may represent distinct entities of the first set of entities / events related to the entities, and related information such as entity-type of the set of entity types and description related for all the entities present within the text associated with the query 124.

At 512, a query response may be retrieved. The processor 202 may select the set of retrieval functions from a defined set of retrieval functions. The defined set of retrieval functions may be retrieved from the server 108 or memory of the system 102. Further, the system 102 may assign each phrase of the sequence of phrases as an input parameter to a respective retrieval function of the set of retrieval functions. In an exemplary embodiment, the set of retrieval functions may include a node localization function, an entity event analysis function, and a frame extraction function. The processor 202 may further apply the set of retrieval functions on the temporal graph to retrieve a query response including at least one video frame of the sequence of video frames 120.

Although the flowchart 500 is illustrated as discrete operations, such as 502, 504, 506, 508, 510, and 512. However, in certain embodiments, such discrete operations may be further divided into additional operations, combined into fewer operations, or eliminated, depending on the particular implementation without detracting from the essence of the disclosed embodiments.

Various embodiments of the disclosure may provide one or more non-transitory computer-readable storage media configured to store instructions that, in response to being executed, cause a system (such as, the example system 102) to perform operations. The operations may include acquiring a sequence of video frames (such as, the sequence of video frames 120 of FIG. 1) associated with video data (such as, the sequence of video data 118 of FIG. 1). The operations may further include receiving a query (such as, the query 124 of FIG. 1) associated with the video data 118. The operations may further include acquiring a temporal graph (such as, the temporal graph 122 of FIG. 1) associated with the sequence of video frames 120. The temporal graph 122 may include a set of subgraphs corresponding to the sequence of video frames, with a set of nodes in each subgraph of the set of subgraphs representing the set of entities and edges in each subgraph of the set of subgraphs representing relationships between the set of nodes. The operations may further include converting the query 124 into a set of retrieval functions. The operations may further include applying the set of retrieval functions on the temporal graph to retrieve a query response including at least one video frame of the sequence of video frames 120.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the system 102. In some embodiments, the different components, modules, engines, and services described in the present disclosure may be implemented as objects or processes that execute on the system 102 (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any system 102 as previously defined in the present disclosure, or any module or combination of modulates running on the system 102.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method, executable by a system, the method comprising:
acquiring a sequence of video frames associated with video data;
receiving a query associated with the video data;
acquiring a temporal graph associated with the sequence of video frames,
the temporal graph including a set of subgraphs corresponding to the sequence of video frames, with a set of nodes in each subgraph of the set of subgraphs representing a set of entities and edges in each subgraph of the set of subgraphs representing relationships between the set of nodes in respective video frame;
converting the query into a set of retrieval functions; and
applying the set of retrieval functions on the temporal graph to retrieve a query response including at least one video frame of the sequence of video frames.

2. The method according to claim 1, further comprising:
generating a plurality of textual descriptions corresponding to a plurality of nodes in the temporal graph,
wherein the plurality of nodes includes the set of nodes in each subgraph of the set of subgraphs, and
wherein each textual description of the plurality of textual descriptions includes edge information associated with a respective node of the plurality of nodes and attributes associated with the respective node of the plurality of nodes; and
generating a plurality of node embeddings by applying a text embedding model on the plurality of text descriptions.

3. The method according to claim 2, further comprising grouping the plurality of textual descriptions to obtain a set of entity-specific descriptions corresponding to each entity of the set of entities.

4. The method according to claim 3, further comprising:
phrasing the query into a sequence of phrases by prompting a neural language model with the query; and
selecting the set of retrieval functions from a defined set of retrieval functions; and
assigning each phrase of the sequence of phrases as an input parameter to a respective retrieval function of the set of retrieval functions.

5. The method according to claim 4, wherein the set of retrieval functions include a node localization function, an entity event analysis function, and a frame extraction function.

6. The method according to claim 4, wherein a first retrieval function of the set of retrieval functions is applied by:
selecting a first phrase as a grounding phrase from the sequence of phrases;
computing a first phrase embedding by applying the text embedding model on the first phrase;
computing a plurality of similarity scores between the first phrase embedding and each node embedding of the plurality of node embeddings; and
identifying, from the plurality of nodes, a relevant node that matches the first phrase based on the plurality of similarity scores.

7. The method according to claim 6, wherein a second retrieval function of the set of retrieval functions is applied by:
selecting a second phrase from the sequence of phrases;
acquiring the set of entity-specific descriptions corresponding to an entity associated with the relevant node,
wherein the entity is in the set of entities, and each entity-specific description of the set of entity-specific descriptions corresponds to a respective video frame of the sequence of video frames;
determining, from the set of entity-specific descriptions, an entity-specific description that matches a context of the second phrase, by prompting the neural language model with an instruction including the second phrase and the set of entity-specific descriptions; and
determining a time index of the entity-specific description.

8. The method according to claim 7, wherein a third retrieval function of the set of retrieval functions is applied by:
selecting a third phrase from the sequence of phrases; and
extracting the at least one video frame from the sequence of video frames based on analysis of the third phrase and the time index.

9. The method according to claim 1, further comprising:
receiving a first query from a user device of a user; and
rephrasing, based on application of a neural language model on the first query, the first query into the query.

10. One or more non-transitory computer-readable storage media storing instructions that, in response to being executed, cause a system to perform operations, the operations comprising:
acquiring a sequence of video frames associated with video data;
receiving a query associated with the video data;
acquiring a temporal graph associated with the sequence of video frames;
the temporal graph including a set of subgraphs corresponding to the sequence of video frames, with a set of nodes in each subgraph of the set of subgraphs representing a set of entities and edges in each subgraph of the set of subgraphs representing relationships between the set of nodes in respective video frame;
converting the query into a set of retrieval functions; and
applying the set of retrieval functions on the temporal graph to retrieve a query response including at least one video frame of the set of video frames.

11. The one or more non-transitory computer-readable storage media according to claim 10, further comprising:
generating a plurality of textual descriptions corresponding to a plurality of nodes in the temporal graph,
wherein the plurality of nodes includes the set of nodes in each subgraph of the set of subgraphs, and
wherein each textual description of the plurality of textual descriptions includes edge information associated with a respective node of the plurality of nodes and attributes associated with the respective node of the plurality of nodes; and
generating a plurality of node embeddings by applying a text embedding model on the plurality of text descriptions.

12. The one or more non-transitory computer-readable storage media according to claim 11, further comprising grouping the plurality of textual descriptions to obtain a set of entity-specific descriptions corresponding to each entity of the set of entities.

13. The one or more non-transitory computer-readable storage media according to claim 12, further comprising:
phrasing the query into a sequence of phrases by prompting a neural language model with the query; and
selecting the set of retrieval functions from a defined set of retrieval functions; and
assigning each phrase of the sequence of phrases as an input parameter to a respective retrieval function of the set of retrieval functions.

14. The one or more non-transitory computer-readable storage media according to claim 13, wherein the set of retrieval functions include a node localization function, an entity event analysis function, and a frame extraction function.

15. The one or more non-transitory computer-readable storage media according to claim 13, wherein a first retrieval function of the set of retrieval functions is applied by:
selecting a first phrase as a grounding phrase from the sequence of phrases;
computing a first phrase embedding by applying the text embedding model on the first phrase;
computing a plurality of similarity scores between the first phrase embedding and each node embedding of the plurality of node embeddings; and
identifying, from the plurality of nodes, a relevant node that matches the first phrase based on the plurality of similarity scores.

16. The one or more non-transitory computer-readable storage media according to claim 15, wherein a second retrieval function of the set of retrieval functions is applied by:
selecting a second phrase from the sequence of phrases;
acquiring the set of entity-specific descriptions corresponding to an entity associated with the relevant node,
wherein the entity is in the set of entities, and each entity-specific description of the set of entity-specific descriptions corresponds to a respective video frame of the sequence of video frames;
determining, from the set of entity-specific descriptions, an entity-specific description that matches a context of the second phrase, by prompting the neural language model with an instruction including the second phrase and the set of entity-specific descriptions; and
determining a time index of the entity-specific description.

17. The one or more non-transitory computer-readable storage media according to claim 16, wherein a third retrieval function of the set of retrieval functions is applied by:
selecting a third phrase from the sequence of phrases; and
extracting the at least one video frame from the sequence of video frames based on analysis of the third phrase and the time index.

18. The one or more non-transitory computer-readable storage media according to claim 10, further comprising:
receiving a first query from a user device of a user; and
rephrasing, based on application of a neural language model on the first query, the first query into the query.

19. A system, comprising:
one or more memory devices storing instructions, and
one or more processors, coupled to the one or more memory devices, executing the stored instructions to perform a process comprising:
acquiring a sequence of video frames associated with video data;
receiving a query associated with the video data;
acquiring a temporal graph associated with the sequence of video frames,
the temporal graph including a set of subgraphs corresponding to the sequence of video frames, with a set of nodes in each subgraph of the set of subgraphs representing a set of entities and edges in each subgraph of the set of subgraphs representing relationships between the set of nodes;
converting the query into a set of retrieval functions; and
applying the set of retrieval functions on the temporal graph to retrieve a query response including at least one video frame of the set of video frames.

20. The system according to claim 19, wherein the process further comprises:
generating a plurality of textual descriptions corresponding to a plurality of nodes in the temporal graph,
wherein the plurality of nodes includes the set of nodes in each subgraph of the set of subgraphs, and
wherein each textual description of the plurality of textual descriptions includes edge information associated with a respective node of the plurality of nodes and attributes associated with the respective node of the plurality of nodes; and
generating a plurality of node embeddings by applying a text embedding model on the plurality of text descriptions.
